# EUROPÄISCHE PATENTANMELDUNG

(11) **EP 4 273 028 A1**
(43) Veröffentlichungstag der Anmeldung: **08.11.2023**
(21) Anmeldenummer: 22171372.0
(22) Anmeldetag: 03.05.2022
(51) Int. Cl.: B62D 25/00, B62D 29/00

(54) **DÄMMELEMENT**

(71) Anmelder: Sika Technology AG, 6340 Baar (CH)
(72) Erfinder: ETTERLI, Heinz, 5627 Besenbüren (CH)
(74) Vertreter: Sika Patent Attorneys

(57) **Zusammenfassung**

Ein Dämmelement zur Dämmung eines Strukturelementes in einem Kraftfahrzeug umfasst einen Träger und zumindest ein längliches Expansionselement. Dabei hat der Träger zumindest ein Fixierungselement zur Fixierung des Trägers am Strukturelement und auch zumindest ein Aufnahmeelement. Das längliche Expansionselement umfasst expandierbares Material, und das Expansionselement ist auf dem Aufnahmeelement des Trägers aufgesteckt.

## Beschreibung

Die Erfindung betrifft ein Dämmelement zur Dämmung eines Strukturelementes in einem Kraftfahrzeug.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken.

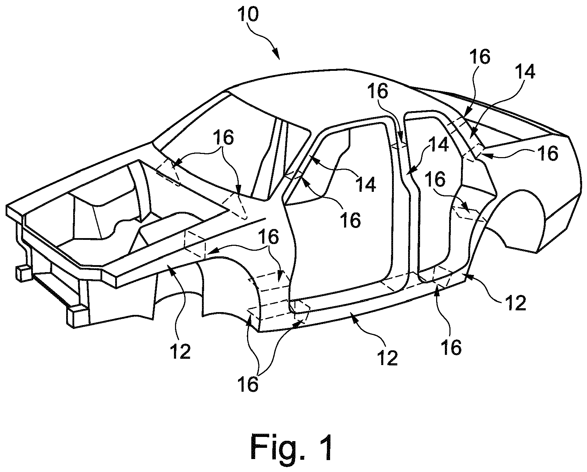

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Abdichtungs- und/oder Verstärkungselementen 16 abgedichtet bzw. verstärkt.

Nachteilig an den bisher bekannten Abdichtungs- und/oder Verstärkungselementen ist es, dass für jede Karosserieform und für jeden Hohlraum einer Karosserie ein individuell angepasstes Element hergestellt werden muss. Dies führt zu hohen Entwicklungs- und Herstellungskosten und ist insbesondere bei kleineren Fahrzeugserien nachteilhaft.

Es ist daher eine Aufgabe der vorliegenden Erfindung, ein verbessertes Dämmelement zur Dämmung eines Strukturelementes in einem Kraftfahrzeug zur Verfügung zu stellen, welches die Nachteile des Standes der Technik vermeidet. Das Dämmelement soll insbesondere wirtschaftliche Vorteile bei Kleinserien mit sich bringen und insgesamt einen Entwicklungs- und Herstellungsaufwand der Dämmelemente reduzieren.

Diese Aufgabe wird gelöst durch ein Dämmelement zur Dämmung eines Strukturelementes in einem Kraftfahrzeug, das Dämmelement umfassend: einen Träger, welcher zumindest ein Fixierungselement zur Fixierung des Trägers am Strukturelement und zumindest ein Aufnahmeelement hat; und zumindest ein längliches Expansionselement mit expandierbarem Material, wobei das Expansionselement auf dem Aufnahmeelement des Trägers aufgesteckt ist.

Ein Kerngedanke der vorliegenden Erfindung besteht insbesondere darin, dass durch die Verwendung von modulartigen Bauteilen (Träger und Expansionselemente) eine Vielzahl von verschiedenen Dämmelementen geschaffen werden kann, mit welchen eine Vielzahl von verschieden geformten Hohlräumen gedämmt werden kann. Dabei muss nicht für jeden neuen Anwendungsfall ein neues Dämmelement ausgebildet werden, was üblicherweise hohe Kosten mit sich bringt, weil jeweils neue Spritzgussformen benötigt werden. Durch die Verwendung von individuell zusammenstellbaren Trägern und Expansionselementen können für verschiedene Anwendungsfälle immer wieder dieselben Module verwendet werden.

Insbesondere bei Kleinserien oder anderen Anwendungsfällen mit geringer Stückzahl lohnt es sich oftmals nicht, separate Spritzgussformen für spezifische Dämmelemente anzufertigen. Durch das Verwenden von standardisierten Modulen, insbesondere der Expansionselemente, können für solche Anwendungsfälle kostengünstige Lösungen zur Verfügung gestellt werden.

Die Bezeichnung "Dämmelement" bzw. "Dämmung" bzw. "gedämmt" umfasst im Zusammenhang mit dieser Erfindung Elemente bzw. Strukturen bzw. Verfahrensschritte zur Abschottung und/oder Verschliessung und/oder Dämmung eines Strukturelementes. Diese verschiedenen Eigenschaften eines solchen Dämmelementes können dabei einzeln oder aber in Kombination miteinander auftreten.

In einer beispielhaften Ausführungsform ist das Expansionselement durch ein Extrusionsverfahren hergestellt.

Das Verwenden eines Extrusionsverfahrens zur Herstellung der Expansionselemente hat den Vorteil, dass dadurch mit einem Herstellungsprozess beziehungsweise mit einer Herstellungsvorrichtung verschiedene Expansionselemente hergestellt werden können. Beispielsweise kann ein Querschnitt der länglichen Expansionselemente variiert werden, oder es kann auch eine Länge der länglichen Expansionselemente variiert werden. Dadurch lassen sich je nach Anwendungsfall verschiedene Expansionselemente zur Verfügung stellen.

In einer beispielhaften Ausführungsform ist das Expansionselement nur aus expandierbarem Material gebildet.

In einer alternativen Ausführungsform umfasst das Expansionselement eine folienartige oder bandartige Einlage, wobei diese Einlage beidseitig von expandierbarem Material bedeckt ist.

In einer beispielhaften Weiterbildung ist die Einlage vollständig von expandierbarem Material umschlossen.

In einer beispielhaften Weiterbildung ist die Einlage eine Metallfolie oder ein Metallband, insbesondere eine Stahlfolie oder ein Stahlband.

In einer beispielhaften Weiterbildung ist die Einlage im Wesentlichen mittig im Expansionselement angeordnet.

In einer beispielhaften Ausführungsform hat das Expansionselement ein oder zwei oder mehr als zwei Löcher.

Das Vorsehen solcher Löcher hat den Vorteil, dass dadurch das Aufstecken der Expansionselemente auf den Träger einfacher vonstattengeht. Insbesondere bei Expansionselementen mit Einlagen ist es von Vorteil, wenn die Expansionselemente Löcher aufweisen, durch welche das Aufnahmeelement des Trägers hindurchgeführt werden kann.

In einer beispielhaften Weiterbildung haben das Loch beziehungsweise die Löcher einen länglichen Grundriss.

Das Vorsehen eines länglichen Loches bietet den Vorteil, dass bei Ausführungsformen mit zwei oder mehr Löchern und zwei oder mehr Aufnahmeelementen die Abstände zwischen den Löchern weniger toleranzkritisch sind.

In einer beispielhaften Ausführungsform hat das expandierbare Material eine Expansionsrate zwischen 1000% und 4000%, insbesondere zwischen 1500% und 3000%.

In einer beispielhaften Ausführungsform hat der Träger ein oder zwei Fixierungselemente.

In einer beispielhaften Weiterbildung sind das Fixierungselement oder die Fixierungselemente als Clip oder als Pushpin ausgebildet.

In einer beispielhaften Ausführungsform hat der Träger ein oder zwei oder mehr als zwei Aufnahmeelemente.

In einer beispielhaften Ausführungsform ist der Träger durch ein Spritzgussverfahren hergestellt.

In einer beispielhaften Ausführungsform hat das zumindest eine Aufnahmeelement einen Widerhaken an einem freien Ende.

Solche Widerhaken bieten den Vorteil, dass die aufgesteckten Expansionselemente nicht oder im Wesentlichen nicht vom Aufnahmeelement abfallen können.

In einer beispielhaften Ausführungsform ist an jedem Aufnahmeelement nur ein Expansionselement aufgesteckt.

In einem alternativen Ausführungsbeispiel sind an jedem Aufnahmeelement zwischen zwei und acht Expansionselemente aufgesteckt, insbesondere zwischen zwei und sechs Expansionselemente, und insbesondere zwischen zwei und vier Expansionselemente.

In einer beispielhaften Ausführungsform umfasst der Träger zwei Fixierungselemente und zwei Aufnahmeelemente. An diesen zwei Aufnahmeelementen sind zwischen zwei und acht Expansionselemente aufgesteckt, wobei jedes dieser Expansionselemente auf beiden Aufnahmeelementen des Trägers aufgesteckt ist.

Eine solche Konfiguration eines Dämmelementes bietet den Vorteil, dass dadurch Expansionselemente nach einer Expansion ein wandförmig expandiertes Material ausbilden, welches sich sehr gut dazu eignet, Querschnitte in Strukturelementen abzudämmen. Dadurch, dass die Expansionselemente beweglich auf den Aufnahmeelementen aufgesteckt sind, wird erreicht, dass sich die Expansionselemente beziehungsweise das expandierbare Material während einer Expansion entlang der Aufnahmeelemente verschieben kann. Dadurch wird eine sehr starke Expansion des expandierbaren Materials in Richtung der Aufnahmeelemente erreicht, wodurch ein Querschnitt sehr effizient abgedämmt werden kann.

### Expandierbares Material

Als expandierbares Material können grundsätzlich verschiedene Materialien eingesetzt werden, welche zur Schäumung gebracht werden können. Das Material kann dabei Verstärkungseigenschaften aufweisen oder auch nicht. Typischerweise wird das expandierbare Material thermisch, durch Feuchtigkeit oder durch elektromagnetische Strahlung zur Expansion gebracht.

Ein solches expandierbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage, Schaumstrukturen in Polymeren zu erzeugen.

Bevorzugt wird das expandierbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate.

Geeignete Treibmittel sind beispielsweise auch kommerziell erhältlich unter dem Handelsnamen Expancel^{®} von der Firma Akzo Nobel, Niederlande, oder unter dem Handelsnamen Celogen^{®} von der Firma Chemtura Corp., USA.

Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 250°C, insbesondere von 100°C bis 250°C, bevorzugt von 120°C bis 240°C, bevorzugt von 130°C bis 230°C schäumbar.

Als expandierbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Füssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete expandierbare Materialien sind Treibmittel enthaltende einkomponentige Polyurethanzusammensetzungen, aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon^{®} BF 1350 und Vestagon^{®} BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschrieben sind in EP 0 204 970.

Weiterhin eignen sich als expandierbare Materialien Treibmittel enthaltende zweikomponentige Epoxid/Polyurethan-Zusammensetzungen, wie sie beispielsweise beschrieben sind in WO 2005/080524 A1.

Weiterhin eignen sich als expandierbare Materialien Treibmittel enthaltende Ethylen-Vinyl-Acetat-Zusammensetzungen.

Ebenfalls geeignete expandierbare Materialien werden beispielsweise unter dem Handelsnamen SikaBaffle^{®} 240, SikaBaffle^{®} 250 oder SikaBaffle^{®} 255 von der Sika Corp., USA, vertrieben und sind in den Patenten US 5,266,133 und US 5,373,027 beschrieben. Solche expandierbaren Materialien sind für die vorliegende Erfindung besonders bevorzugt.

Als expandierbare Materialien mit Verstärkungseigenschaften sind beispiels-weise diejenigen bevorzugt, welche unter dem Handelsnamen SikaReinforcer^{®} 941 von der Sika Corp., USA, vertrieben werden. Diese sind beschrieben in US 6,387,470.

In einer beispielhaften Ausführungsform hat das expandierbare Material eine Expansionsrate von 800% bis 5000%, bevorzugt von 1000% bis 4000%, besonders bevorzugt von 1500% bis 3000%. Expandierbare Materialien mit solchen Expansionsraten bieten den Vorteil, dass dadurch eine zuverlässige Abdichtung bzw. Dämmung des Strukturelementes gegen Flüssigkeiten und Schall erreicht werden kann.

In einer beispielhaften Ausführungsform ist das expandierbare Material als temperaturinduziertes Material ausgebildet.

Dies hat den Vorteil, dass dadurch der Ofen zur Einbrennung der Tauchlackierungsflüssigkeit benutzt werden kann, um das expandierbare Material zu expandieren und um dadurch den Hohlraum zu dämmen. Somit ist kein zusätzlicher Arbeitsschritt notwendig.

### Träger

Der Träger kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder gewachsene organische Materialien, insbesondere Holz- oder andere (gepresste) Faserwerkstoffe oder glasartige oder keramische Materialien; speziell auch geschäumte Materialien dieser Art; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet.

Weiterhin kann der Träger einen beliebigen Aufbau und eine beliebige Struktur aufweisen. Es kann beispielsweise massiv, hohl, oder geschäumt sein oder eine gitterartige Struktur aufweisen. Die Oberfläche des Trägers kann typischerweise glatt, rau oder strukturiert sein.

### System

Die eingangs gestellte Aufgabe wird zudem gelöst durch ein System in einem Kraftfahrzeug, das System umfassend: ein Strukturelement, welches einen Hohlraum hat; und ein Dämmelement gemäss obiger Beschreibung; wobei das Dämmelement im Hohlraum des Strukturelementes angeordnet ist.

In einer beispielhaften Ausführungsform ist das Strukturelement ein Abschnitt einer Säule oder eines Trägers oder einer Verstrebung einer Karosserie eines Kraftfahrzeugs.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie;
- Fig. 2a und 2b: eine schematische Darstellung beispielhafter Dämmelemente;
- Fig. 3: eine schematische Darstellung eines beispielhaften Dämmelementes;
- Fig. 4a und Fig. 4b: eine schematische Darstellung beispielhafter Expansionselemente;
- Fig. 5: eine schematische Darstellung eines beispielhaften Trägers; und
- Fig. 6a und Fig. 6b: eine schematische Darstellung eines beispielhaften Systems.

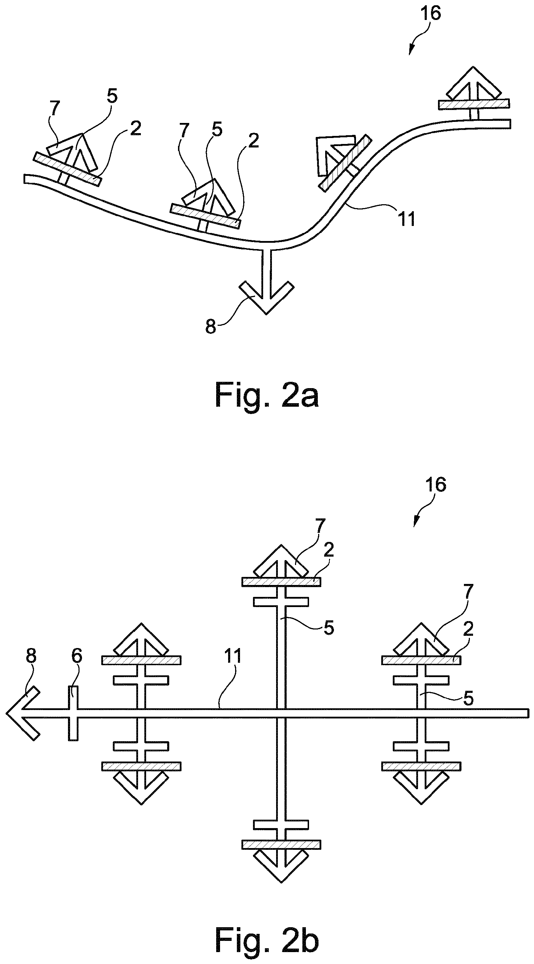

In den Fig. 2a und 2b sind beispielhafte Dämmelemente 16 dargestellt. In beiden Ausführungsbeispielen ist auf jedem Aufnahmeelement 5 nur ein Expansionselement 2 aufgesteckt. Der Träger 11 des Dämmelementes 16 umfasst dabei jeweils mehrere Aufnahmeelemente 5. Zudem umfasst der Träger 11 jeweils ein Fixierungselement 8 zur Fixierung des Trägers 11 an einem Strukturelement (nicht dargestellt). Die Aufnahmeelemente 5 haben jeweils an einem freien Ende einen Widerhaken 7, welcher verhindert, dass die Expansionselemente 2 nach dem Aufstecken vom Aufnahmeelement 5 abfallen können. In Fig. 2b hat der Träger im Bereich des Fixierungselementes 8 zudem einen Stützfuss 6, so dass der Träger 11 am Strukturelement besser abgestützt ist. In beiden Ausführungsbeispielen sind die Expansionselemente 2 jeweils in einem Querschnitt senkrecht zur Längsachse der Expansionselemente dargestellt.

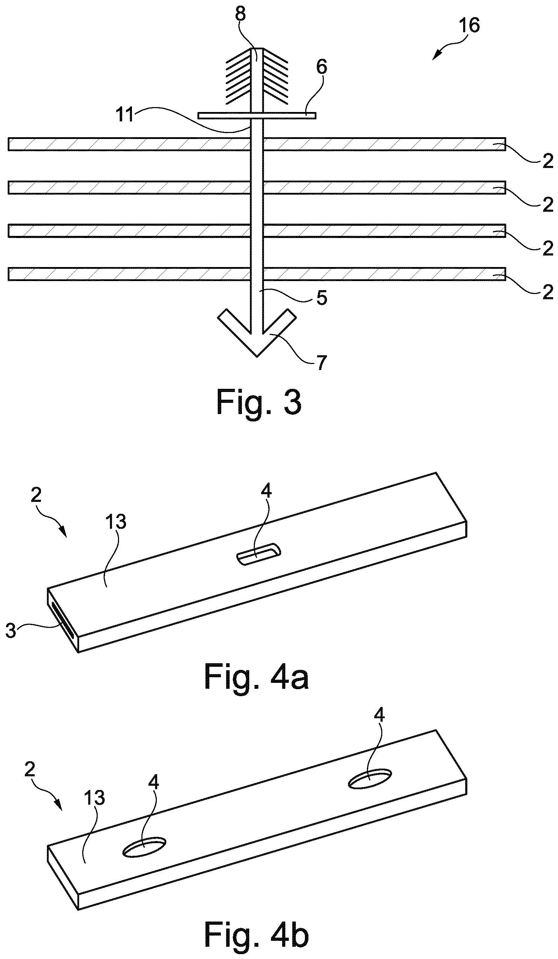

In Fig. 3 ist ein weiteres Ausführungsbeispiel eines Dämmelementes 16 beispielhaft dargestellt. Dieses Dämmelement 16 hat wiederum einen Träger 11 mit einem Fixierungselement 8 mit Stützfuss 6 sowie mit einem Aufnahmeelement 5 mit Widerhaken 7. In diesem Ausführungsbeispiel sind auf einem Aufnahmeelement 5 mehrere Expansionselemente 2 aufgesteckt.

In den Fig. 4a und 4b sind beispielhaft zwei Ausführungsbeispiele von Expansionselementen 2 dargestellt. In Fig. 4a ist ein erstes Expansionselement 2 dargestellt, welches ein längliches Loch 4 aufweist. Dieses Expansionselement 2 hat zudem eine Einlage 3, welche in etwa mittig im expandierbaren Material 13 angeordnet ist. In Fig. 4b ist ein zweites Ausführungsbeispiel eines Expansionselementes 2 dargestellt. Dieses Expansionselement 2 hat zwei längliche Löcher 4, welche in einem bestimmten Abstand zueinander angeordnet sind. In diesem Ausführungsbeispiel besteht das Expansionselement 2 ausschliesslich aus expandierbarem Material 13.

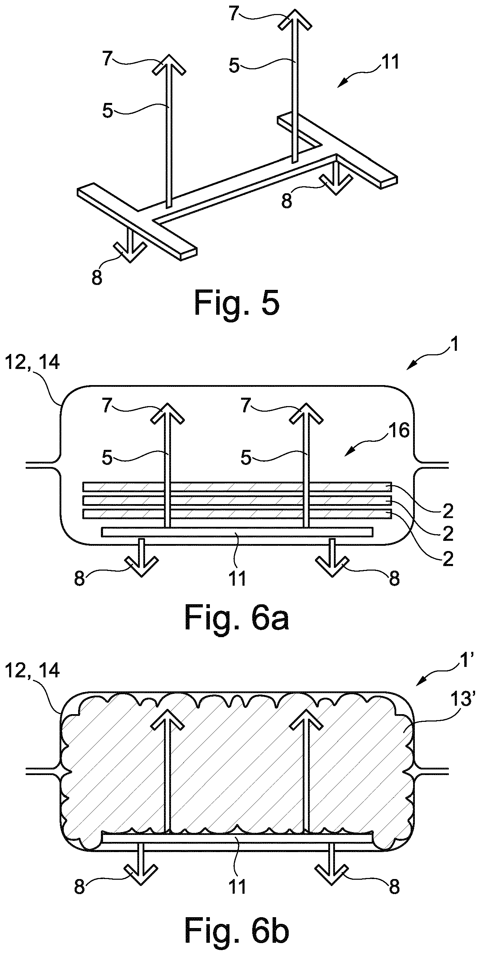

In Fig. 5 ist ein beispielhafter Träger 11 dargestellt. In diesem Ausführungsbeispiel hat der Träger 11 zwei Fixierungselemente 8 sowie zwei Aufnahmeelemente 5 mit Widerhaken 7.

In den Fig. 6a und 6b ist schliesslich ein System 1 dargestellt, welches einen Träger 11 gemäss Fig. 5 und mehrere Expansionselemente 2 gemäss Fig. 4b umfasst. Das Dämmelement 16 ist dabei in einem Strukturelement 12, 14 angeordnet. In Fig. 6a ist ein Zustand vor einer Expansion des expandierbaren Materials 13 dargestellt, und in Fig. 6b ist ein Zustand nach einer Expansion dargestellt, so dass nun das expandierte Material 13' vorliegt. Durch die Führung der Expansionselemente 2 an den Aufnahmeelementen 5 wird eine gerichtete Expansion in einer Ebene der Aufnahmeelemente 5 erreicht, so dass ein Querschnitt des Strukturelementes 12, 14 effizient ausgeschäumt beziehungsweise abgedämmt werden kann.

### Bezugszeichenliste

- 1: System
- 2: Expansionselement
- 3: Einlage
- 4: Loch
- 5: Aufnahmeelement
- 6: Stützfuss
- 7: Widerhaken
- 8: Fixierungselement
- 10: Karosserie
- 11: Träger
- 12: Strukturelement
- 13: expandierbares Material
- 13': expandiertes Material
- 14: Strukturelement
- 16: Dämmelement

## Patentansprüche

1. Dämmelement (16) zur Dämmung eines Strukturelementes (12, 14) in einem Kraftfahrzeug, das Dämmelement (16) umfassend:
einen Träger (11), welcher zumindest ein Fixierungselement (8) zur Fixierung des Trägers (11) am Strukturelement (12, 14) und zumindest ein Aufnahmeelement (5) hat; und
zumindest ein längliches Expansionselement (2) mit expandierbarem Material (13), wobei das Expansionselement (2) auf dem Aufnahmeelement (5) des Trägers (11) aufgesteckt ist.

2. Dämmelement (16) nach Anspruch 1, wobei das Expansionselement (2) durch ein Extrusionsverfahren hergestellt ist.

3. Dämmelement (16) nach einem der vorhergehenden Ansprüche, wobei das Expansionselement (2) nur aus expandierbarem Material (13) gebildet ist.

4. Dämmelement (16) nach einem der Ansprüche 1 oder 2, wobei das Expansionselement (2) eine folienartige oder bandartige Einlage (3) umfasst, wobei diese Einlage (3) beidseitig von expandierbarem Material (13) bedeckt ist.

5. Dämmelement (16) nach einem der vorhergehenden Ansprüche, wobei das Expansionselement ein oder zwei oder mehr als zwei Löcher (4) hat.

6. Dämmelement (16) nach Anspruch 5, wobei das Loch (4) beziehungsweise die Löcher (4) einen länglichen Grundriss haben.

7. Dämmelement (16) nach einem der vorhergehenden Ansprüche, wobei das expandierbare Material (13) eine Expansionsrate zwischen 1000% und 4000% hat.

8. Dämmelement (16) nach einem der vorhergehenden Ansprüche, wobei der Träger (11) ein oder zwei Fixierungselemente (8) hat.

9. Dämmelement (16) nach Anspruch 8, wobei die Fixierungselemente oder das Fixierungselement als Clip oder als Pushpin ausgebildet sind.

10. Dämmelement (16) nach einem der vorhergehenden Ansprüche, wobei der Träger (11) ein oder zwei oder mehr als zwei Aufnahmeelemente (5) hat.

11. Dämmelement (16) nach einem der vorhergehenden Ansprüche, wobei der Träger (11) durch ein Spritzgussverfahren hergestellt worden ist.

12. Dämmelement (16) nach einem der vorhergehenden Ansprüche, wobei das zumindest eine Aufnahmeelement (5) einen Widerhaken (7) an einem freien Ende hat.

13. Dämmelement (16) nach einem der vorhergehenden Ansprüche, wobei an jedem Aufnahmeelement (5) nur ein Expansionselement (2) aufgesteckt ist.

14. Dämmelement (16) nach einem der Ansprüche 1 bis 12, wobei an jedem Aufnahmeelement (5) zwischen zwei und acht Expansionselemente (2) aufgesteckt sind.

15. System (1) in einem Kraftfahrzeug, das System (1) umfassend:
ein Strukturelement (12, 14), welches einen Hohlraum hat; und
ein Dämmelement (16) nach einem der Ansprüche 1 bis 14;
wobei das Dämmelement (16) im Hohlraum des Strukturelementes (12, 14) angeordnet ist.
